# EUROPEAN PATENT SPECIFICATION

(11) **EP 0 368 004 B1**
(45) Date of publication and mention of the grant of the patent: **04.05.1994**
(21) Application number: 89118803.9
(22) Date of filing: 10.10.1989
(51) Int. Cl.: F16J 9/02

(54) **Piston**
Kolben
Piston

(30) Priority: 04.11.1988 IT 6798688
(43) Date of publication of application: 16.05.1990
(73) Proprietor: Borgo-Nova SpA, I-10091 Alpignano Torino (IT)
(72) Inventor: Casellato, Rino, I-10129 Torino (IT)
(74) Representative: Hadfield, Robert Franklin

(56) References cited:
- BE-A- 408 044
- FR-A- 491 682
- US-A- 3 834 719
- US-A- 3 926 166

## Description

The present invention relates to pistons for internal combustion engines and compressors.

The ability to operate pistons, especially internal combustion engine pistons, with only two piston rings instead of the more usual three and to achieve acceptable oil consumption and gas blow-by levels is very advantageous in terms of piston friction reduction.

In addition to a reduction of piston friction the use of only two rings is also advantageous in reducing the compression height of the piston. Reduction in compression height may produce consequent benefits in engine height and piston weight which are also of great importance.

There is disclosed in FR-A-491682 a piston/cylinder arrangement in which the lowest provided piston ring is generally "L" shaped in cross-section, with a first, relatively rigid, generally radially extending, at least substantially planar part; and a second, relatively flexible, radially outer part of discontinuous form, extending generally downwardly parallel to the piston axis. The piston wall is relieved to comprise part of the associated piston ring groove, and to accommodate the radially inner face of the second, radially outer piston ring part. The piston ring is split so that it may be assembled on the piston, but the second, radially outer piston ring part is made flexible because of having a discontinuous form, there being additional splits distributed throughout the part for this purpose. During piston movement the flexible, second, radially outer piston ring part conforms to the cylinder wall, and there is a substantially constant tangential load on the ring because of this flexibility. The provision of the splits is undesirable because, inherently, the ring can not provide an efficient sealing function. A more efficient sealing arrangement is also shown in this prior disclosure, but this requires the provision of two such rings in the uppermost groove, the second radially outer part of each ring extends generally upwardly parallel to the piston axis, and it is required that the splits in the two rings are arranged so as not to coincide with each other. Such an arrangement is undesirably complex.

There is disclosed in US-A-3926166 a piston and ring arrangement whereby the ring is collapsed or dished when assembled in the cooperating cylinder, because of the provision of a relief on the radially inner surface of the ring. The amount of dishing is required to change under pressure during compression and firing in the engine cylinder, this change being produced by an appropriate turning moment applied to the ring. Subsequently, the ring returns to its initial form in the cylinder, because of the resilience imparted to the twisted ring.

According to the present invention a piston for an internal combustion engine has a plurality of piston rings each located in a piston ring groove, and the lowest piston ring is generally "L" shaped in cross-section, with a first, generally radially extending, at least substantially planar part; and a second, radially outer part extending generally downwardly parallel to the piston axis, and having an outer face co-operating with the cylinder wall, forming an angle therewith of between 1° and 4°, the piston wall being relieved to comprise part of the associated piston ring groove and to accommodate the radially inner face of the second radially outer part; characterised in that the second, radially outer part of the lowest piston ring has a continuous form along its periphery, not having any axially extending splits therein, and the arrangement is such that, because of frictional forces acting on the lowest piston ring, when the piston is descending, there is a turning moment applied to the second, radially outer part thereof in the sense to cause the ring to scrape oil efficiently from the cylinder wall, and when the piston is ascending there is a turning moment applied to the second, radially outer part in the opposite sense to cause the ring to slide easily over the cylinder wall.

The piston of the present invention may have only two piston rings. The lower piston ring may act in an exclusively oil scraping function or may act as a combined oil scraper and compression ring. Where the former is the case then the groove for the piston ring may overlap the gudgeon pin bore. Where the ring is used as a combination compression and oil scraping ring the groove must have a continuous lower radial face to limit gas blow-by.

In order that the present invention may be more fully understood examples will now be described by way of illustration only, with reference to the accompanying drawings, of which:
Figure 1 shows a section through part of a piston according to the present invention and having two piston rings;
Figure 2 shows an alternative cross sectional shape of the same part of the lower piston ring of the piston of Figure 1; and

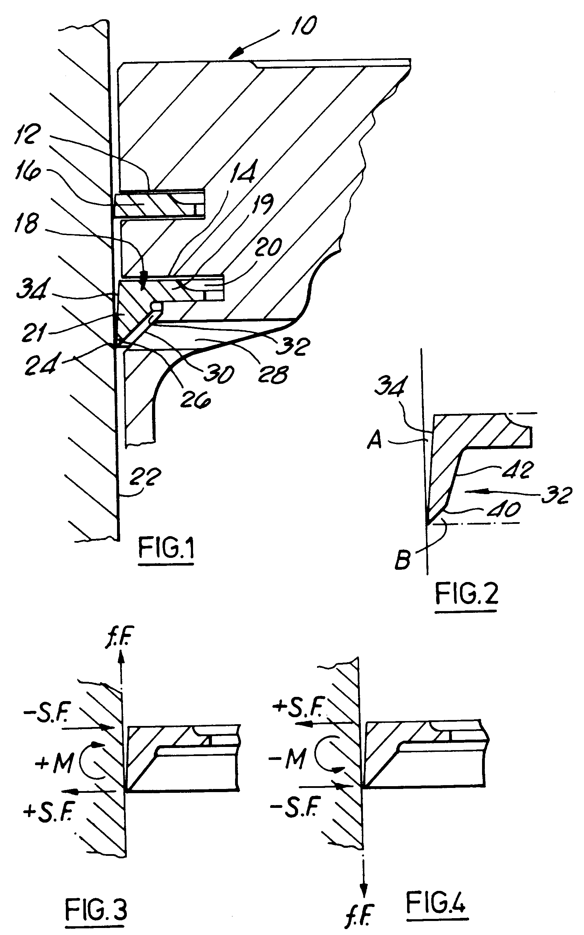

Figures 3 and 4 correspond to Figure 2, and show schematically the forces acting on the lower piston ring of Figure 1 when in operation.
Referring now to Figures 1 and 2 and where only the left hand side of a piston is shown, and the piston is denoted generally at 10. The piston has two piston ring grooves 12, 14 having piston rings 16, 18 received in them. The upper ring 16 may be a known compression type ring. The lower ring 18 has a generally "L" - shaped section. A first part 19 of the "L" co-operates with the groove 14 and has a relieved section on its upper, inner peripheral edge formed by a rabbet 20. The second part 21 of the "L" has a conventional continuous form, not having any additional splits therein, and provides the ring working face which co-operates with the engine cylinder wall 22. The ring seals against the wall 22 with line contact 24 and has a chisel edge 26. Oil drainage slots or holes 28 are provided in the piston to return oil, removed from the cylinder wall, to the engine sump. The piston wall is relieved in the area 30 to accommodate the rear face 32 of the second part 21 of the piston ring 18. The angle "A" formed between the ring working face 34 and the cylinder wall 22 may lie in the range from 1° to 4°. The angle "B" formed between the rear face 32 and a normal to the cylinder wall may lie in the range from 30° to 60°.

Angles "A" and "B" are shown in Figure 2 which also shows an alternative form of ring where the rear face 32 is formed by two surfaces 40, 42 having an obtuse included angle.

The lower edge 26 of the second part 21 need not necessarily be a chisel edge and rings each having a lower edge comprising a small, flat surface of less than 0.5mm radial width have been made. The flat surface may lie substantially normal to the cylinder wall 22.

In operation, the shape of the lower piston ring 18 produces advantageous changes in the forces acting thereon depending on the direction of travel of the piston. In Figure 3 the piston is descending in its cylinder, the frictional force "fF" causes a turning moment in the sense which produces an increase in the side force "SF" on the ring. When the piston is rising in the cylinder, Figure 4, "fF" is greatly reduced and a turning moment in the opposite sense is produced decreasing the side force "SF". Thus in the descending mode the piston ring works efficiently to scrape oil from the cylinder wall and to limit gas blow-by; in the ascending mode the ring slides easily over the cylinder wall and leaves any oil film in place.

## Claims

1. A piston (10) for an internal combustion engine has a plurality of piston rings (16 and 18) each located in a piston ring groove (respectively 12 and 14), and the lowest piston ring (18) is generally "L" shaped in cross-section, with a first, generally radially extending, at least substantially planar part (19); and a second, radially outer part (21) extending generally downwardly parallel to the piston axis, and having an outer face (34) co-operating with the cylinder wall, forming an angle therewith of between 1° and 4°, the piston wall being relieved (at 30) to comprise part of the associated piston ring groove and to accommodate the radially inner face (32) of the second radially outer part (21); characterised in that the second, radially outer part (21) of the lowest piston ring (18) has a continuous form along its periphery, and the arrangement is such that, because of frictional forces acting on the lowest piston ring (18), when the piston is descending there is a turning moment applied to the second, radially outer part (21) thereof in the sense to cause the ring to scrape oil efficiently from the cylinder wall, and when the piston is ascending there is a turning moment applied to the second, radially outer part (21) in the opposite sense to cause the ring to slide easily over the cylinder wall.

2. A piston according to claim 1 characterised in that for the lowest piston ring (18) the radially outer part (21) makes line contact (24) with the associated cylinder wall (22).

3. A piston according to claim 1 or claim 2, characterised in that for the lowest piston ring (18) the radially inner peripheral face (32) of the radially outer part (21) comprises two faces (40, 42) having an obtuse included angle.

4. A piston according to any one preceding claim characterised in that for the lowest piston ring (18) the radially outer part (21) terminates in the form of a circumferential chisel edge (26).

5. A piston according to any one preceding claim from 1 to 4 characterised in that for the lowest piston ring (18) the radially outer part (21) terminates in a flat surface of less than 0.5mm radial width.

6. A piston according to claim 5 characterised in that for the lower piston ring (18) the flat surface is substantially normal to the associated cylinder wall (22).

7. A piston according to any one preceding claim characterised in that only two piston (16, 18) rings are provided.

8. A piston according to claim 7 characterised in that the lower piston ring (18) acts as a combined oil scraper and compression ring.

## Patentansprüche

1. Kolben (10) für Brennkraftmaschinen mit einer Mehrzahl von Kolbenringen (16 und 18), deren jeder in einer Kolbenringnut (12 bzw. 14) sitzt, wobei der unterste Kolbenring (18) mit einem allgemein L-förmigen Querschnitt ausgebildet und mit einem im allgemeinen radial verlaufenden, zumindest im wesentlichen ebenen Teil (19) versehen ist sowie ein zweites, radial äußeres Teil (21) aufweist, das allgemein nach unten hin parallel zur Kolbenachse verläuft und eine Außenfläche (34) aufweist, die mit der Zylinderwand zusammenwirkt und mit dieser einen Winkel zwischen 1° und 4° ausbildet, und wobei die Kolbenwand (bei 30) zurückgesetzt ist, um in Anpassung an die radial innenliegende Fläche (32) des zweiten radial äußeren Teiles (21) einen Teil der zugeordneten Kolbenringnut auszubilden, **dadurch gekennzeichnet**, daß das zweite, radial äußere Teil (21) des untersten Kolbenringes (18) eine längs seine Umfangs durchgehende Form aufweist und die Anordnung derart ist, das infolge von auf den untersten Kolbenring (18) wirkenden Reibkräften beim Abwärtslaufen des Kolbens ein Drehmoment auf dessen zweites, radial äußeres Teil (21) in dem Sinne aufgebracht wird, daß bewirkt wird, daß der Ring wirksam Öl von der Zylinderwand abstreift, und beim Hochlaufen des Kolbens ein Drehmoment auf das zweite, radial äußere Teil (21) in entgegengesetztem Sinne aufgebracht wird, das bewirkt, daß der Ring leicht über die Zylinderwand gleitet.

2. Kolben nach Anspruch 1, dadurch gekennzeichnet, daß beim untersten Kolbenring (18) der radial äußere Teil (21) mit der zugeordneten Zylinderwand (22) einen Linienkontakt (24) ausbildet.

3. Kolben nach Anspruch 1 oder 2, dadurch gekennzeichnet, daß beim untersten Kolbenring (18) die radial innere Umlauffläche (32) des radial äußeren Teils (21) zwei Flächen (40, 42) umfaßt, die zwischen sich einen stumpfen Winkel einschließen.

4. Kolben nach einem der vorhergehenden Ansprüche, dadurch gekennzeichnet, daß beim untersten Kolbenring (18) das radial äußere Teil (21) in Form einer umlaufenden Spitzkante (26) ausläuft.

5. Kolben nach einem der vorhergehenden Ansprüche 1 bis 4, dadurch gekennzeichnet, daß beim untersten Kolbenring (18) der radial äußere Teil (21) in einer flachen Fläche einer radialen Weite von weniger als 0,5 mm ausläuft.

6. Kolben nach Anspruch 5, dadurch gekennzeichnet, daß beim unteren Kolbenring (18) die flache Fläche im wesentlichen senkrecht zur zugeordneten Zylinderwand (22) verläuft.

7. Kolben nach einem der vorhergehenden Ansprüche, dadurch gekennzeichnet, daß nur zwei Kolbenringe (16, 18) vorgesehen sind.

8. Kolben nach Anspruch 7, dadurch gekennzeichnet, daß der untere Kolbenring (18) als ein kombinierter Öl-Abstreif- und Kompressionsring ausgebildet ist.

## Revendications

1. Piston (10) pour moteur à combustion interne comportant une pluralité de segments de piston (16 et 18) situés chacun dans une rainure (respectivement 12 et 14) de segment de piston, et le segment le plus bas (18) ayant généralement la forme d'un "L" en section transversale, avec une première partie (19) relativement rigide, s'étendant généralement radialement, au moins sensiblement plane; et une seconde partie (21) externe radialement, s'étendant généralement vers le bas parallèlement à l'axe du piston, et comportant une face externe (34) coopérant avec la paroi du cylindre, formant un angle avec celle-ci compris entre 1° et 4°, la paroi du piston étant évidée (en 30) pour comprendre une partie de la rainure de segment de piston associé et pour recevoir la face interne radialement (32) de la seconde partie (21) externe radialement; caractérisé en ce que la seconde partie externe radialement (21) du segment de piston le plus bas (18) a une forme continue le long de sa périphérie, et l'agencement est tel que, en raison des forces de frottement agissant sur le segment de piston le plus bas (18), lorsque le piston descend, un moment de couple est appliqué sur la seconde partie externe radialement (21) du segment dans une direction pour amener le segment à racler l'huile efficacement de la paroi du cylindre, et lorsque le piston monte, un moment de couple est appliqué sur la seconde partie externe radialement (21) dans la direction opposée pour amener le segment à glisser facilement sur la paroi du cylindre.

2. Piston selon la revendication 1, caractérisé en ce que pour le segment de piston le plus bas (18) la partie externe radialement (21) crée une ligne de contact (24) avec la paroi (22) de cylindre associée.

3. Piston selon la revendication 1 ou 2, caractérisé en ce que pour le segment de piston le plus bas (18) la face périphérique interne radialement (32) de la partie externe radialement (21) comprend deux faces (40, 42) formant un angle obtus.

4. Piston selon l'une quelconque des revendications précédentes, caractérisé en ce que pour le segment de piston le plus bas (18) la partie externe radialement (21) se termine en forme de bord en biseau circonférentiel (26).

5. Piston selon l'une quelconque des revendications 1 à 4, caractérisé en ce que pour le segment de piston le plus bas (18) la partie externe radialement (21) se termine en une surface plate d'une largeur radiale inférieure à 0,5 mm.

6. Piston selon la revendication 5, caractérisé en ce que pour le segment de piston le plus bas (18) la surface plate est sensiblement perpendiculaire à la paroi (22) de cylindre associée.

7. Piston selon l'une quelconque des revendications précédentes, caractérisé en ce que seuls deux segments de piston (16, 18) sont prévus.

8. Piston selon la revendication 7, caractérisé en ce que le segment de piston le plus bas (18) est à la fois un segment racleur d'huile et un segment de compression.
